# FASCICULE DE BREVET EUROPEEN

(11) **EP 1 257 765 B1**
(45) Date de publication et mention de la délivrance du brevet: **23.03.2005**
(21) Numéro de dépôt: 01907669.4
(22) Date de dépôt: 23.01.2001
(51) Int. Cl.: F16M 1/00, F16M 5/00, B23Q 1/01, B67C 7/00, B67C 3/22

(54) **MACHINE DE TRAITEMENT DE RECIPIENTS COMPORTANT UNE TABLE EN STRUCTURE SANDWICH ET PROCEDE DE REALISATION D'UNE TELLE TABLE**
VORRICHTUNG ZUR BEHANDLUNG VON VERPACKUNGSBEHÄLTERN MIT EINEM TISCH MIT SANDWICHSTRUKTUR SOWIE EIN VERFAHREN ZU SEINER HERSTELLUNG
MACHINE FOR TREATING CONTAINERS COMPRISING A SANDWICH STRUCTURED TABLE AND METHOD FOR MAKING SUCH A TABLE

(30) Priorité: 09.02.2000 FR 0001568
(43) Date de publication de la demande: 20.11.2002
(73) Titulaire: SIDEL, 76053 Le Havre Cedex (FR)
(72) Inventeur: STOCCHI, Gabriele, 76053 Le Havre Cedex (FR)
(74) Mandataire: Siloret, Patrick
(86) Numéro de dépôt international: PCT/FR2001/000208
(87) Numéro de publication internationale: WO 2001/059354

(56) Documents cités:
- EP-A- 0 484 798
- EP-A- 0 901 974
- DE-A- 19 801 882
- GB-A- 2 147 026
- GB-A- 2 300 616

## Description

L'invention se rapporte au domaine des machines de traitement de récipients, notamment des machines du type de celles que l'on trouve dans une ligne d'embouteillage. Il peut donc s'agir notamment de rinceuses, de remplisseuses, de machines de bouchage ou de capsulage, ou encore d'étiqueteuses.

Ces machines comportent généralement une table qui repose sur le sol par des pieds. Sur la table sont fixés des éléments fonctionnels tels que des roues de transferts de récipients ou des dispositifs de traitement de bouteilles. Au sens du brevet, un dispositif de traitement est l'organe qui effectue l'opération principale à laquelle est dédiée la machine considérée. Ainsi, dans une machine de remplissage rotative, ce dispositif de traitement sera un carrousel sur lequel sont montés des becs de remplissage. Dans une rinceuse, ce pourra être le carrousel qui prend en charge les récipients et qui porte les buses de nettoyage.

Très souvent, ces éléments fonctionnels comportent un carrousel rotatif. Les récipients parcourent ainsi, en suivant la disposition de différents éléments fonctionnels successifs, une trajectoire faite d'une succession d'arc de cercles qui s'enchaînent tangentiellement les uns aux autres. Dans tous les cas, pour assurer un bon fonctionnement de la machine, les éléments fonctionnels doivent être montés sur la table de manière à avoir une disposition définie avec précision.

En dessous de la table, on rassemble généralement des accessoires tels que les organes de transmission qui assurent l'entraînement des éléments fonctionnels, mais aussi des pompes ou des canalisations pour amener des produits de nettoyage ou pour évacuer des produits excédentaires déversés sur la table.

La table de la machine a donc pour fonction de supporter les différents éléments fonctionnels. Elle doit présenter une rigidité importante, d'autant plus qu'elle repose généralement sur un nombre limité de pieds si l'on veut pouvoir disposer de l'espace libre en dessous de la table pour l'implantation d'un maximum d'accessoires.

Par ailleurs, surtout dans les applications alimentaires, la table doit pouvoir résister à l'oxydation en dépit du fait que les produits utilisés pour le nettoyage de la machine sont généralement très corrosifs.

Selon l'art antérieur, les tables de telles machines sont réalisées sous la forme d'une structure en treillis qui est généralement faite de tubes ou de poutres d'acier ordinaire et qui est recouverte d'une tôle d'acier inoxydable. Avec une telle conception, il faut généralement que la structure en treillis soit relativement dense ce qui implique d'une part l'utilisation d'une grande quantité de tubes, et ce qui implique des temps d'assemblage, par exemple par soudure, relativement importants. De plus, l'assemblage des tubes doit être effectué avec une précision relativement importante sous peine d'avoir une table "bancale". Tout ceci entraîne donc un coût de revient important. De plus, le fait de prévoir une tôle de couverture en acier inoxydable permet certes de protéger la structure en treillis d'une grande partie des projections de produits corrosifs, mais il n'en demeure pas moins que des projections indirectes peuvent atteindre la structure en acier ordinaire et que celle-ci est de toutes façons plongée dans une atmosphère souvent propice aux phénomènes de corrosion (température, humidité, etc..). Il en résulte que, souvent, après quelques temps de fonctionnement, la structure est atteinte par la corrosion, ce qui n'est jamais satisfaisant.

Une autre solution déjà proposée est de réaliser en fonderie une table monobloc en matière inoxydable. Cette solution est satisfaisante en termes de rigidité et de résistance à la corrosion, mais elle implique l'emploi d'une grande quantité de matériau inoxydable, ce qui est pénalisant en termes de poids et, encore plus, en termes de coûts.

Le document GB-A-2 147 026 décrit un procédé de réalisation d'une stucture sandwich de machine outil qui apparaît de construction simple et peu onéreuse. Toutefois, ce document n'enseigne pas la manière dont cette structure pourrait être transposée aux machines de traitement de bouteilles, afin que de telles machines, une fois les éléments fonctionnels fixés, répondent à toutes les contraintes, notamment de rigidité et de résistance à la corrosion.

Dans ce but, l'invention propose une machine de traitement de récipients, notamment pour une ligne d'embouteillage, du type comportant au moins une table sur laquelle sont montés des éléments fonctionnels aptes notamment à transférer et/ou à traiter les récipients, la table étant réalisée sous la forme d'une structure sandwich comportant, d'une part, un caisson externe, et, d'autre part, une âme interne constituée d'un matériau qui est injecté sous forme fluide dans le caisson et qui se solidifie à l'intérieur de celui-ci et les éléments fonctionnels étant montés sur la table par l'intermédiaire de pièces d'interface qui sont ancrées dans l'âme interne de la structure sandwich.

Selon d'autres caractéristiques de l'invention :
- l'âme interne est constituée d'un matériau de type béton ;
- l'âme interne est constituée d'une résine synthétique ;
- le caisson est réalisé en acier inoxydable ;
- le caisson est réalisé sous la forme de tôles pliées et soudées ;
- le caisson comporte une face supérieure qui est formée d'éléments de tôles sensiblement plats mais disposés de telle sorte que la face supérieure du caisson est globalement bombée pour favoriser l'écoulement des liquides vers l'extérieur de la table ;
- les éléments fonctionnels comprennent une roue de transfert de récipients ;
- les éléments fonctionnels comprennent un carrousel de remplissage de récipients ;
- les éléments fonctionnels comprennent un carrousel de bouchage de récipients ;
- les éléments fonctionnels comprennent un carrousel de nettoyage de récipients ;
- les éléments fonctionnels comprennent des pieds de support de la table ; et
- la table de la machine est formée de plusieurs éléments de tables juxtaposés.

L'invention propose aussi un procédé de réalisation d'une table de machine de traitement de récipients ayant les caractéristiques précédentes, caractérisé en ce qu'il comporte les étapes consistant à :
- disposer les pièces d'interface sur un gabarit de fabrication pour figer leur disposition relative ;
- fixer le caisson sur lesdites pièces d'interface ;
- remplir le caisson avec le matériau destiné à former l'âme de la structure sandwich.

D'autres caractéristiques et avantages de l'invention apparaîtront à la lecture de la description détaillée qui suit ainsi que dans les dessins annexés dans lesquels :
- la figure 1 est une vue schématique en coupe illustrant une partie d'une machine munie d'une table conforme aux enseignements de l'invention ;
- la figure 2 est une vue de dessus d'une table selon l'invention prévue pour être juxtaposée à d'autres tables complémentaires pour former une machine ;
- les figures 3 à 5 sont des vues schématiques qui illustrent différentes étapes d'un procédé préféré de réalisation d'une table selon l'invention.

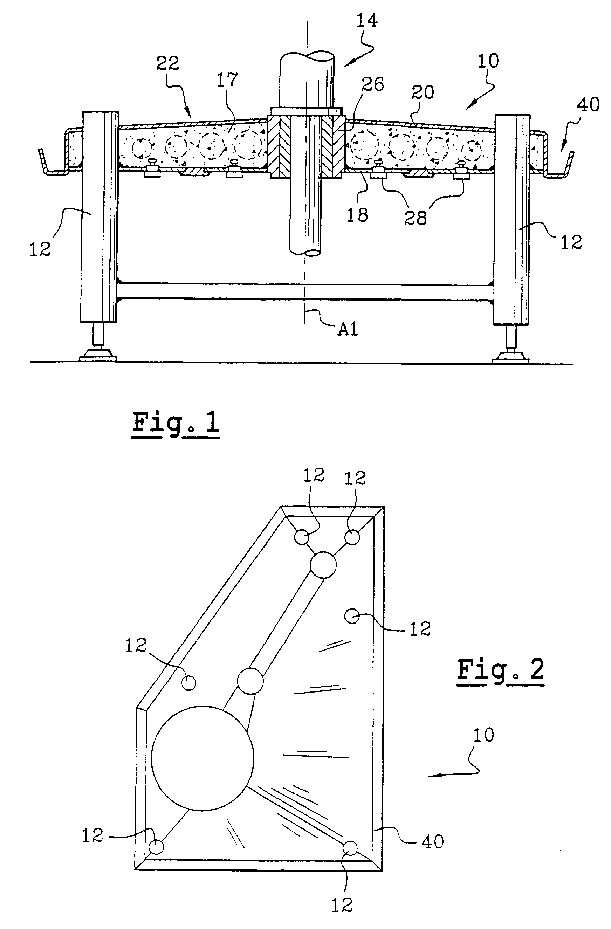

On a illustré sur la figure 1 une table 10 faisant partie d'une machine de traitement de récipients. Cette machine est par exemple une machine de rinçage, une machine de remplissage, une machine de bouchage, de capsulage, etc...

Cette table présente sensiblement la forme d'un plateau qui repose sur le sol par une série de pieds 12 et qui porte un certain nombre d'éléments fonctionnels, par exemple un carrousel 14 qui est monté à rotation autour de son axe A1 sur la table 12. Ce carrousel est destiné par exemple à recevoir les récipients pour leur faire subir le traitement auquel est dédiée la machine ou l'élément de machine considéré.

Sur la figure 1, on n'a illustré que deux pieds 12 et une partie d'un carrousel 14 mais une table de ce genre peut comporter d'autres éléments fonctionnels.

Ainsi, sur la vue de dessus de la figure 2, on a illustré une table au contour polygonal qui peut par exemple recevoir un carrousel de capsulage de récipients et deux roues de transferts de récipients, la table reposant sur une série de pieds 12 disposés notamment à chacun des angles.

Conformément à l'invention, la table 10 est réalisée sous la forme d'une structure sandwich.

Dans son principe, une structure sandwich comporte une âme interne qui est entourée au moins de deux éléments de peau externes sensiblement en forme de plaques parallèles. L'intérêt majeur des structures sandwich réside dans le rapport extrêmement favorable qui existe entre leur rigidité et leur poids. En effet, dans le cas d'une structure sandwich en forme d∈ plateau, c'est l'âme interne qui confère au plateau l'essentiel de son volume mais ce sont les éléments de peau externe qui lui donnent l'essentiel de sa rigidité. Pour former la peau externe, on utilise généralement un matériau extrêmement rigide, quitte à ce qu'il soit relativement dense et/ou coûteux. Au contraire, pour la réalisation de l'âme interne, on privilégie l'utilisation d'un matériau moins dense et/ou peu onéreux, au moins en comparaison avec le matériau constitutif de la peau. Ce matériau doit toutefois présenter de bonnes propriétés de résistance à la compression. En effet, le rôle principal de l'âme interne d'une structure sandwich est d'éviter que les deux éléments de peau parallèles ne se déforment trop selon la direction de leur épaisseur en se rapprochant l'un de l'autre. En effet, si les deux éléments de peau se rapprochent l'un de l'autre, même localement, l'épaisseur globale de la structure diminue. Or, la résistance à la flexion d'une telle structure est fonction du module de flexion dont la valeur varie, pour un matériau donné, avec le cube de l'épaisseur. Aussi, si l'épaisseur de la structure diminue localement du fait des efforts de flexion, sa résistance à la flexion diminuera dans des proportions bien plus élevées et la structure risque de s'affaisser sous la contrainte.

Dans l'exemple de réalisation proposé, on a choisi de réaliser la structure sandwich sous la forme d'un caisson dont les deux peaux externes sont reliées l'une à l'autre par des renforts de rigidification 16 réalisées dans le même matériau que la peau, ceci afin d'accroître encore la rigidité intrinsèque de la structure. De plus, la structure en caisson présente l'avantage selon lequel, une fois le caisson réalisé, il délimite un volume sensiblement fermé dans lequel il est possible d'injecter l'âme 17 sous forme fluide, comme dans un moule. Le matériau constitutif de l'âme se solidifie à l'intérieur du caisson en épousant parfaitement la forme du caisson, ce qui garantit un bonne cohésion de la structure sandwich.

Le matériau utilisé pour réaliser le caisson est de préférence un acier inoxydable. Avantageusement, il est composé pour l'essentiel d'une plaque inférieure 18 sensiblement plane et d'une série de tôles supérieures 20 qui sont pliées et assemblées entre elles de manière à former un dos supérieur bombé 22. Le caractère bombé du dos est prévu pour éviter toute stagnation de liquide sur la face supérieure de la table. Tout liquide qui se déverse sur la table tend donc à s'écouler vers l'extérieur de celle-ci. De plus, le caractère bombé du dos 22 permet de bénéficier d'un effet de voûte par rapport au poids des éléments fonctionnels qui sont supportés par la table, ce qui est favorable à la rigidité globale de celle-ci.

Le dos supérieur bombé 22 peut aussi être réalisé sous la forme d'une pièce unique obtenue par formage ou par moulage, mais l'utilisation de tôles pliées et soudées permet de diminuer le coût de revient, tout en préservant une grande liberté quant à la possibilité d'adapter exactement la forme de la table en fonction de son implantation. En effet, une telle solution ne nécessite pas la fabrication préalable d'un moule onéreux.

Pour le matériau constitutif de l'âme 17, le choix se porte sur un matériau qui est initialement sous forme fluide, donc susceptible d'être coulé à l'intérieur du caisson après que celui-ci a été assemblé. Ce matériau devra être suffisamment fluide pour bien remplir tout l'espace interne du caisson. Bien entendu, ce matériau doit ensuite se solidifier pour présenter une bonne résistance à la compression.

D'autre paramètres à prendre en compte pour le choix du matériau constitutif de l'âme sont, on l'a vu plus haut, sa densité et son coût.

Dans l'exemple proposé, le matériau constitutif de l'âme est un béton. Il existe sur le marché différents types de préparations prêtes à l'emploi pour former des bétons présentant des caractéristiques diverses, mais présentant tous les points communs d'une grande facilité de mise en oeuvre et d'une grande résistance à la compression. Ces bétons présentent généralement une densité inférieure à 2,5, ce qui est très inférieur à la densité d'un acier (généralement comprise entre 7 et 8). A titre d'exemple, il est possible d'utiliser un béton spécial commercialisé sous la marque "LECAMIX FORTE" par la société LATERITE s.p.a., à Milan, Italie. Ce type de béton présente une densité de l'ordre de 1, c'est-à-dire environ huit fois inférieure à celle de l'acier utilisé pour former le caisson.

On aurait aussi pu choisir d'utiliser une résine synthétique thermodurcissable, voire même une mousse thermodurcissable relativement dense. Cependant, le coût d'une telle solution s'avère supérieure à celle retenue dans l'exemple illustré.

Selon une caractéristique de l'invention, on a avantage à injecter le béton dans le caisson après que celui-ci a été réalisé. Il est donc préférable que le caisson soit sensiblement étanche.

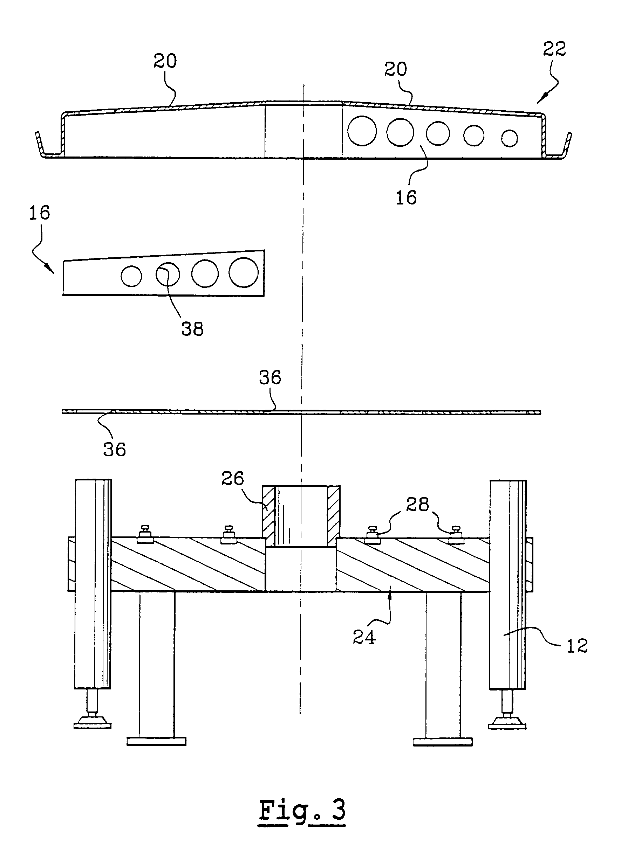

Un procédé particulièrement avantageux de réalisation d'une table selon l'invention est illustré sur les figures 3 à 5.

Comme on peut le voir sur la figure 3, ce procédé implique l'utilisation d'un gabarit 24. Ce gabarit 24 a pour but d'effectuer un prépositionement absolu de différentes pièces d'interface autour desquelles le caisson va être construit, ces pièces d'interface devant permettre ensuite la fixation sur la table des différents éléments fonctionnels.

Dans l'exemple illustré, le gabarit 24 comporte ainsi des emplacements sur lesquels on positionne les pieds 12 et un fût d'interface 26 destiné au montage du carrousel 14.

Il comporte aussi des emplacements pour recevoir des pions d'interface 28. Les pions 28 présentent chacun une embase 30, qui est destinée à dépasser à l'extérieur du caisson pour former par exemple un point de fixation pour divers accessoires de la machine, un corps 32 destiné à s'étendre au travers d'un orifice prévu à cet effet dans la plaque inférieure 18 du caisson, et une tête d'accrochage 34 qui présente des surfaces en contre-dépouille pour arrimer le pion 28 dans le béton.

Une fois disposés dans leurs emplacements respectifs, les pieds 12 et les différentes pièces d'interface telles que le fût 26 et les pions 28 possèdent entre eux une disposition prédéfinie. Bien entendu, le gabarit 24 peut posséder d'autres emplacements pour d'autres pièces d'interface si la table doit porter d'autres éléments fonctionnels. Cette disposition est figée et doit permettre d'assurer un positionnement aussi précis que possible des différents éléments fonctionnels entre eux, une fois qu'ils seront montés sur les pièces d'interface.

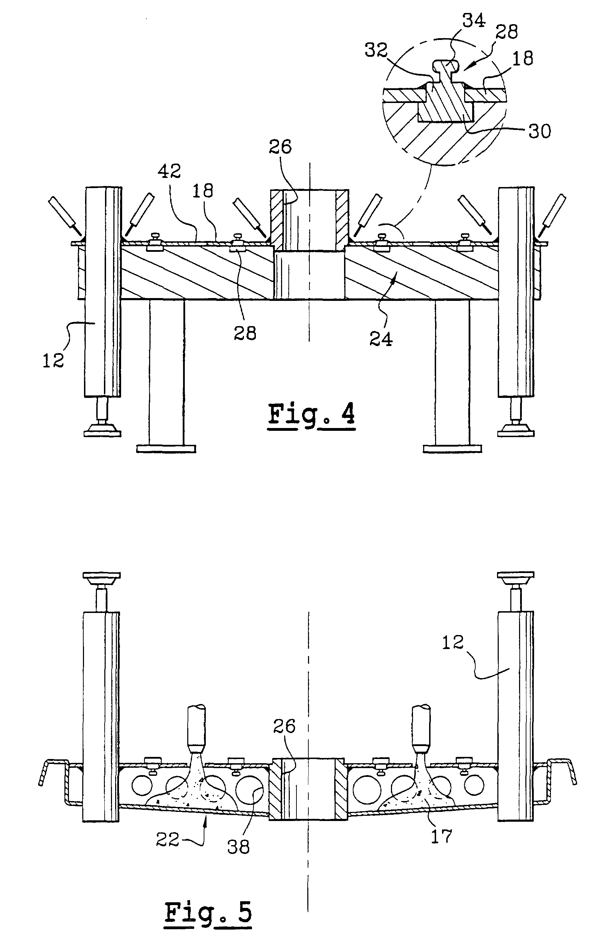

Dans une étape suivante, on amène la plaque inférieure 18 en position sur les éléments prépositionnés. La plaque 18 est donc par exemple pourvue d'orifices adéquats 36 pour permettre sa mise en position. Ensuite, comme on peut le voir sur la figure 4, on fixe la plaque 18 aux différents éléments précédemment mis en place sur le gabarit 24, par exemple par soudure. Au cours de cette opération, ces éléments, à savoir notamment les pieds et les pièces d'interface, restent à leurs emplacements respectifs pour conserver leur positionnement géométrique précis.

Une fois la plaque 18 inférieure rendue solidaire des différents éléments prépositionnés, on procède à l'assemblage des autres parties du caisson, à savoir notamment les renforts 16 et les tôle 20 qui forment le dos 22. On notera que les renforts 16 peuvent tout aussi bien être formés par des parties rabattues d'une des tôles 20, que par des pièces indépendantes. De préférence, ces renforts 16 sont des éléments de plaque qui sont disposés dans des plans perpendiculaires au plan général de la table 10. De même,- il est préférable que ces renforts soient munis d'ouvertures 38 pour éviter de former des compartiments étanches à l'intérieur du caisson.

En effet, une fois le caisson ainsi assemblé, il est possible d'y couler le béton (ou la résine thermodurcissable), en veillant à bien remplir complètement l'intérieur du caisson. Comme cela est illustré sur la figure 5, il peut s'avérer préférable d'effectuer cette opération en mettant la table à l'envers, ceci du fait du caractère bombé du dos 22 du caisson. Dans l'exemple, on peut voir que la plaque inférieure 18 comporte à cet effet des trous d'injection 42, que l'on peut éventuellement obturer après l'opération d'injection du béton. De préférence, on utilisera un béton qui présente, au cours du séchage, un retrait le plus faible possible, voire même un béton présentant une légère expansion.

Une fois que l'âme s'est solidifiée, la table ainsi constituée présente une très grande rigidité, tout en présentant une épaisseur relativement faible. Cette faible épaisseur permet de dégager, sous la table 10 un espace utile important dans lequel peuvent être logés divers organes ou accessoires participant au fonctionnement de la machine. Contrairement à une table comportant une structure en treillis, il sera notamment facile d'implanter sous la table à structure sandwich des courroies de transmission permettant d'assurer l'entraînement en rotation de certains des éléments fonctionnels.

On remarque par ailleurs que les renforts percés 16 permettent un arrimage parfait du dos supérieur bombé à l'âme interne 17.

De plus, la table 10 forme alors un ensemble compact, parfaitement nettoyable et inoxydable.

Dans les procédés traditionnels, les différents éléments fonctionnels, ou les pièces d'interface qui les portent, sont positionnés individuellement chacun par référence à la table. Or celle-ci peut présenter des imperfections géométr ques inhérentes à toute fabrication de pièces de grande dimension. Au contraire, dans le procédé de fabrication selon l'invention, ils sont positionnés tous par rapport à une même référence "exacte" : le gabarit 24 qui, étant réutilisé pour la fabrication de toutes les tables identiques, voire même pour plusieurs types de tables similaires, peut être fabriqué avec grand soin. Il en résulte que les éléments fonctionnels de la machine, à savoir notamment ceux qui sont utilisés pour le traitement des récipients ou pour le positionnement de la machine par rapport à d'autres machines adjacentes, ont une position géométrique parfaitement définie, indépendamment de la précision de réalisation du caisson. Ceci explique que ce dernier peut être réalisé sans précaution excessive par assemblage de tôles pliées et soudées.

On remarquera par ailleurs qu'une partie au moins des tôles soudées qui forment le dos bombé 22 présente une partie repliée sensiblement en U, ceci afin de former, tout autour de la table, une gouttière 40 apte à récupérer un liquide qui se serait déversé sur le dos 22.

Bien entendu, l'exemple de réalisation qui est illustré de manière schématique sur les figures n'est qu'un des modes possibles de réalisation de l'invention. L'invention, qui est notamment d'utiliser une structure sandwich pour réaliser le corps principal de la table 10, peut être mise en oeuvre avec des variantes.

Ainsi, on peut par exemple prévoir de réaliser les pieds 12 en partie au moins selon le même principe d'un caisson rempli d'une âme pour obtenir une grande rigidité. Ces pieds peuvent éventuellement prendre la forme d'extensions du caisson principal de la table de manière à ce que le béton soit injecté dans les pieds en même temps que dans la table.

L'autre caractéristique principal de l'invention réside dans le procédé de réalisation selon lequel le caisson est en quelque sorte formé autour des pièces d'interface qui sont destinées à porter les éléments fonctionnels, ce qui permet de prévoir des tolérances de fabrication relativement larges pour la table, tout en veillant à ce que ces éléments fonctionnels soient parfaitement fixés à cette table. En effet, dans l'exemple illustré, on peut voir que tant les pions d'ancrages 28 que le fût 26 ou les pieds 12 sont parfaitement arrimés non seulement au caisson, mais aussi à l'âme interne 17 puis qu'ils sont tous en partie noyés au contact de celle-ci. Ceci est aussi un facteur d'amélioration de la rigidité de l'ensemble de la table 10.

## Revendications

1. Machine de traitement de récipients, notamment pour une ligne d'embouteillage, du type comportant au moins une table (10) sur laquelle sont montés des éléments fonctionnels (12, 14) aptes notamment à transférer et/ou à traiter les récipients, la table (10) étant réalisée sous la forme d'une structure sandwich comportant, d'une part, un caisson externe (18, 22), et, d'autre part, une âme interne (17) constituée d'un matériau qui est injecté sous forme fluide dans le caisson (18, 22) et qui se solidifie à l'intérieur de celui-ci, et les éléments fonctionnels (14) étant montés sur la table par l'intermédiaire de pièces d'interface (26, 28) qui sont ancrées dans l'âme interne de la structure sandwich.

2. Machine de traitement selon la revendication1, **caractérisée en ce que** l'âme interne (17) est constituée d'un matériau de type béton.

3. Machine de traitement selon la revendication 1, **caractérisée en ce que** l'âme interne (17) est constituée d'une résine synthétique.

4. Machine de traitement selon l'une quelconque des revendications précédentes, **caractérisée en ce que** le caisson est réalisé en acier inoxydable.

5. Machine de traitement selon l'une quelconque des revendications précédentes, **caractérisée en ce que** le caisson est réalisé sous la forme de tôles pliées et soudées.

6. Machine de traitement selon la revendication 5, **caractérisée en ce que** le caisson comporte une face supérieure (22) qui est formée d'éléments de tôles (20) sensiblement plats mais disposés de telle sorte que la face supérieure (22) du caisson est globalement bombée pour favoriser l'écoulement des liquides vers l'extérieur de la table (10).

7. Machine de traitement selon l'une quelconque des revendications précédentes, **caractérisée en ce que** les éléments fonctionnels comprennent une roue de transfert de récipients.

8. Machine de traitement selon l'une quelconque des revendications précédentes, **caractérisée en ce que** les éléments fonctionnels comprennent un carrousel de remplissage de récipients.

9. Machine de traitement selon l'une quelconque des revendications précédentes, **caractérisée en ce que** les éléments fonctionnels comprennent un carrousel de bouchage de récipients.

10. Machine de traitement selon l'une quelconque des revendications précédentes, **caractérisée en ce que** les éléments fonctionnels comprennent un carrousel de nettoyage de récipients.

11. Machine de traitement selon l'une quelconque des revendications précédentes, **caractérisée en ce que** les éléments fonctionnels comprennent des pieds de support de la table.

12. Machine de traitement selon l'une quelconque des revendications précédentes, **caractérisée en ce que** la table de la machine est formée de plusieurs éléments de tables juxtaposés.

13. Procédé de réalisation d'une table de machine de traitement de récipients selon la revendication 1, **caractérisé en ce qu'**il comporte les étapes consistant à :
- disposer les pièces d'interface (26, 28) sur un gabarit (24) de fabrication pour figer leur disposition relative ;
- fixer le caisson (18, 22) sur lesdites pièces d'interface ;
- remplir le caisson avec le matériau destiné à former l'âme (17) de la structure sandwich.

## Patentansprüche

1. Maschine zur Behandlung von Behältern insbesondere für eine Abfüllstrecke von der Art mit zumindest einem Tisch (10), auf dem Funktionselemente (12, 14) angebracht sind, die insbesondere in der Lage sind, die Behälter zu transferieren und/oder zu behandeln, wobei der Tisch (10) in Form einer Sandwichstruktur ausgeführt ist, die einerseits einen äußeren Kasten (18, 22) und andererseits einen inneren Kern (17) umfasst, der aus einem Material besteht, das in flüssiger Form in den Kasten (18, 22) eingespritzt wird und das in dessen Innerem erstarrt, und wobei die Funktionselemente (14) auf dem Tisch mittels Schnittstellenteilen (26, 28) montiert sind, die in dem inneren Kern der Sandwichstruktur verankert sind.

2. Behandlungsmaschine nach Anspruch 1, **dadurch gekennzeichnet, dass** der innere Kern (17) aus einem betonartigen Material besteht.

3. Behandlungsmaschine nach Anspruch 1, **dadurch gekennzeichnet, dass** der innere Kern (17) aus einem Kunstharz besteht.

4. Behandlungsmaschine nach einem der vorhergehenden Ansprüche, **dadurch gekennzeichnet, dass** der Kasten aus rostfreiem Stahl besteht.

5. Behandlungsmaschine nach einem der vorhergehenden Ansprüche, **dadurch gekennzeichnet, dass** der Kasten in Form von gebogenen und geschweißten Blechen ausgeführt ist.

6. Behandlungsmaschine nach Anspruch 5, **dadurch gekennzeichnet, dass** der Kasten eine Oberseite (22) umfasst, die von Blechelementen (20) gebildet wird, die im Wesentlichen flach sind, aber so angeordnet sind, dass die Oberseite (22) des Kastens im Großen und Ganzen gewölbt ist, um das Fließen der Flüssigkeiten vom Tisch (10) nach Außen zu begünstigen.

7. Behandlungsmaschine nach einem der vorhergehenden Ansprüche, **dadurch gekennzeichnet, dass** die Funktionselemente ein Rad zur Übertragung von Behältern umfassen.

8. Behandlungsmaschine nach einem der vorhergehenden Ansprüche, **dadurch gekennzeichnet, dass** die Funktionselemente ein Karussell zur Füllung von Behältern umfassen.

9. Behandlungsmaschine nach einem der vorhergehenden Ansprüche, **dadurch gekennzeichnet, dass** die Funktionselemente ein Karussell zum Verschließen von Behältern umfassen.

10. Behandlungsmaschine nach einem der vorhergehenden Ansprüche, **dadurch gekennzeichnet, dass** die Funktionselemente ein Karussell zur Reinigung von Behältern umfassen.

11. Behandlungsmaschine nach einem der vorhergehenden Ansprüche, **dadurch gekennzeichnet, dass** die Funktionselemente Füße zum Stützen des Tischs umfassen.

12. Behandlungsmaschine nach einem der vorhergehenden Ansprüche, **dadurch gekennzeichnet, dass** der Tisch der Maschine von mehreren nebeneinander liegenden Tischelementen gebildet wird.

13. Verfahren zur Herstellung eines Tischs für eine Maschine zur Behandlung von Behältern nach Anspruch 1, **dadurch gekennzeichnet, dass** es folgende Schritte umfasst:
- Anordnen von Schnittstellenteilen (26, 28) auf einem Fertigungsgestell (24) zur Fixierung ihrer relativen Anordnung;
- Befestigen des Kastens (18, 22) an den Schnittstellenteilen;
- Füllen des Kastens mit Material, das den Kern (17) der Sandwichstruktur bilden soll.

## Claims

1. Container-processing machine, particularly for a bottling line, of the type comprising at least one table (10) on which are mounted functional elements (12, 14) suitable in particular for transferring and/or processing the containers, the table (10) being produced in the form of a sandwich structure, comprising, on the one hand, an outer casing (18, 22) and, on the other hand, an inner core (17) composed of a material which is injected in fluid form into the casing (18, 22) and which solidifies inside the latter, and the functional elements (14) being mounted on the table by means of interface parts (26, 28) which are anchored in the inner core of the sandwich structure.

2. Processing machine according to Claim 1, **characterized in that** the inner core (17) is composed of a concrete-type material.

3. Processing machine according to Claim 1, **characterized in that** the inner core (17) is composed of a synthetic resin.

4. Processing machine according to any one of the preceding claims, **characterized in that** the casing is made of stainless steel.

5. Processing machine according to any one of the preceding claims, **characterized in that** the casing is produced in the form of folded and welded metal sheets.

6. Processing machine according to Claim 5, **characterized in that** the casing comprises an upper face (22) which is formed from sheet-metal elements (20) which are substantially flat but arranged in such a way that the upper face (22) of the casing is generally convex to promote runoff of the liquids towards the outside of the table (10).

7. Processing machine according to any one of the preceding claims, **characterized in that** the functional elements comprise a container transfer wheel.

8. Processing machine according to any one of the preceding claims, **characterized in that** the functional elements comprise a container-filling carousel.

9. Processing machine according to any one of the preceding claims, **characterized in that** the functional elements comprise a container-closing carousel.

10. Processing machine according to any one of the preceding claims, **characterized in that** the functional elements comprise a container-cleaning carousel.

11. Processing machine according to any one of the preceding claims, **characterized in that** the functional elements comprise legs to support the table.

12. Processing machine according to any one of the preceding claims, **characterized in that** the table of the machine is formed from a number of juxtaposed table elements.

13. Method of producing a table for a container-processing machine according to Claim 1, **characterized in that** it comprises the steps consisting in:
- arranging the interface parts (26, 28) on a production template (24) in order to fix their relative arrangement;
- fastening the casing (18, 22) to the said interface parts;
- filling the casing with the material intended to form the core (17) of the sandwich structure.
